# EUROPEAN PATENT SPECIFICATION

(11) **EP 2 035 591 B1**
(45) Date of publication and mention of the grant of the patent: **01.08.2012**
(21) Application number: 07719058.5
(22) Date of filing: 12.06.2007
(51) Int. Cl.: C22B 3/04, C22B 3/00

(54) **IMPROVED LEACHING METHOD**
VERBESSERTES AUSLAUGUNGSVERFAHREN
PROCÉDÉ AMÉLIORÉ DE LIXIVIATION

(30) Priority: 12.06.2006 AU 2006903157 P
(43) Date of publication of application: 18.03.2009
(73) Proprietor: Murrin Murrin Operations Pty Ltd, Perth, WA 6000 (AU)
(72) Inventor: RODRIGUEZ, Michael, Kingsley, Western Australia 6026 (AU); WEDDERBURN, Bruce, James, Glen Waverley, Victoria 3150 (AU)
(74) Representative: Thomson, Craig Richard
(86) International application number: PCT/AU2007/000815
(87) International publication number: WO 2007/143777

(56) References cited:
- WO-A1-03/102253
- WO-A2-01/75184
- US-A1- 2005 211 019

## Description

### Field of the Invention

The present invention relates to an improved leaching method. In particular, the method of the present invention is intended to provide the relatively rapid wetting of an ore to be leached.

### Background Art

Atmospheric leaching methods for the treatment of some difficult to leach ore materials have received some attention in recent times. Some ore materials can be quite difficult to leach under atmospheric conditions, particularly as a heap leach, due to the quantity of fines in the material. Some clays swell and or fines migrate through a heap and will block the passage of leaching solution through the heap, resulting in poor recoveries.

In order to address this problem, plant operators have typically ramped up the flow rate of the leaching solution slowly to prevent blockages in the heap. Whilst this may avoid fines migration to some extent, it also increases the time required to leach the material. Further, as a result of the slow initial flow rate, the ore material at the bottom of the heap tends to sit for a relatively long time before it is wetted by the leach solution. This can be particularly problematic in cases where the ore material is agglomerated, as the agglomerates cure they become brittle and tend to break down if left to dry out over long periods.

The Applicant has surprisingly discovered that applying a relatively high initial flow rate has unexpected advantages over the current method of "ramping up" from a low flow rate. In particular, a high hydraulic conductivity is maintained, indicating improved percolation of the lixiviant through the ore material. Additionally, faster leaching kinetics have been observed, achieving improved metal recoveries.

The preceding discussion of the background art is intended to facilitate an understanding of the present invention only. It should be appreciated that the discussion is not an acknowledgement or admission that any of the material referred to was part of the common general knowledge in Australia as at the priority date of the application.

Throughout the specification, unless the context requires otherwise, the word "comprise" or variations such as "comprises" or "comprising", will be understood to imply the inclusion of a stated integer or group of integers but not the exclusion of any other integer or group of integers.

Throughout the specification, the term "atmospheric" when used with reference to leaching is to be understood to refer to any one of a vat, heap, thin-layer, dump or in-situ leach, unless the context requires otherwise.

Further, reference to a heap is to be understood to encompass a number of heaps leached in series.

Throughout the specification, the term "ore material" is understood to refer to any one of ore, ore reject material, concentrate, waste rock or mill scats material.

### Disclosure of the Invention

In accordance with the present invention there is provided an improved leaching method characterised by the method steps of:
i) preparing and stacking an ore material to be leached such that the ore material is suitable for an atmospheric leach;
ii) applying a lixiviant at an initial irrigation rate;
iii) subsequently applying the lixiviant at a second irrigation rate, the second irrigation rate being lower than the first irrigation rate; and
iv) recovering metal values from a pregnant liquor solution resulting from steps ii) and iii).

Preferably, the ore material preparation includes agglomerating the ore with water and/or acid prior to application of the lixiviant.

In one form of the present invention the ore material preparation further includes stacking in one or more heaps.

Stacking of the ore material may be achieved by traditional methods.

Preferably, the initial irrigation rate of the lixiviant falls within the range of about 10 Lm²/hr and 600 L/m²/hr.

Still preferably, the initial irrigation rate falls within the range of 15 L/m²/hr and 30 L/m²/hr.

The initial irrigation rate is preferably applied for a period of about 1 to 80 days.

Still preferably, the period of application of the initial irrigation rate falls within the range of 35 to 45 days.

Still preferably, the second irrigation rate falls in the range of about 5 L/m²/hr and 15 L/m²/hr. The second irrigation rate may preferably be increased over time towards the range of the first irrigation rate.

The second irrigation rate is preferably applied over a range of about 60 to 480 days.

More preferably, the second irrigation rate is applied over a range of about 60 to 360 days.

The degree of saturation achieved at the initial irrigation rate is preferably between about 70 to 90%. More preferably, the degree of saturation achieved at the initial irrigation rate is between about 80 to 90%.

Recovery of the metal values may be achieved by commonly known methods including ion exchange, electrowinning, crystallisation, solvent extraction and chemical precipitation.

### Brief Description of the Drawings

The present invention will now be described, by way of example only, with reference to an embodiment thereof and the accompanying drawing, in which;

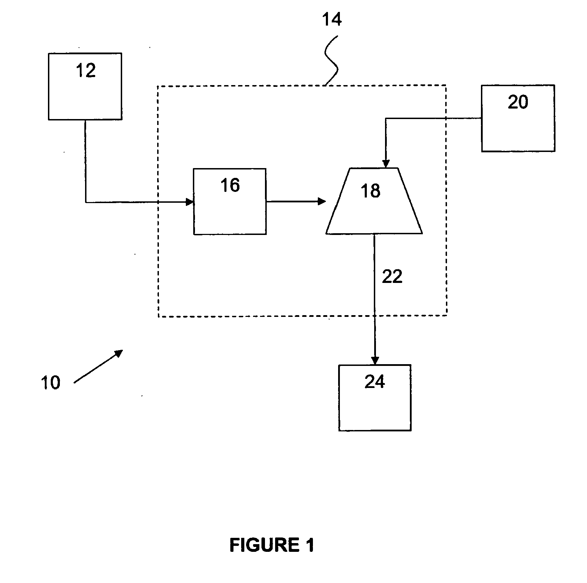

Figure 1 is a diagrammatic representation of an improved leaching method in accordance with the present invention, shown as applied to a heap leach of a nickel containing ore material.

### Best Mode(s) for Carrying Out the Invention

In Figure 1 there is shown an improved leaching method 10 in accordance with the present invention, this embodiment directed to the heap leaching of an ore material 12 containing nickel.

The ore material 12 is subjected to a preparation stage 14 in which it undergoes an agglomeration step 16 before being stacked using known methods, to form one or more leaching heaps 18.

During leaching, a lixiviant 20 is applied to the top of the leaching heap 18 at an initial irrigation rate within the range of about 10 to 600 L/m²/hr, for example 15 to 30 L/m²/hr, using traditional methods of application. The first irrigation rate is maintained for a period of about 1 to 80 days, for example 35 to 45 days. The lixiviant is then applied at a second irrigation rate, the second irrigation rate being lower than the first irrigation rate, for a period of about 60 to 480 days, for example 60 to 360 days. During this time, the second irrigation rate is increased gradually such that it approaches the first irrigation rate, over a period of about 70 to 110 days, for example 70 to 90 days.

A pregnant leach solution 22, resulting from the heap leach 18, with or without recirculation to one or more of the heap(s), is then directed to a recovery stage 24 during which nickel is recovered from solution.

It is further envisaged that the recovery step 24 may include but is not limited to any one of the known methods such as ion exchange, electrowinning, crystallisation, solvent extraction and chemical precipitation.

The present invention is further illustrated by way of the following non-limiting example:

### EXAMPLE 1

Table 1 lists the parameters for two column tests performed on an agglomerated nickel containing ore material, using a lixiviant containing sulphuric acid.

Column 1 was subjected to a first irrigation rate of 15 L/m²/hr, dropping back to zero, before applying a second irrigation rate of 5 L/m²/hr which then increased again in stages to 15 L/m²/hr. The dropping back of the flow rate to zero between the first and second irrigation rates is simply an artefact of the switching between sources of lixiviant used for irrigation at each rate.

Column 2 was subjected to a staged increase 5 to 10 to 15 L/m²/hour in accordance with known practices in the industry, without the first application at 15 L/m²/hr as per column 1.

**Table 1.**

| **PARAMETER** | **COLUMN 1** | **COLUMN 2** |
|---|---|---|
| Initial total volume (m³) * | 18.86 | 18.86 |
| Dry mass (t) | 14.522 | 14.085 |
| Initial mass of water (t) | 5.903 | 5.750 |
| Initial grav. moisture content (%) | 40.6 | 40.8 |
| Initial dry density (t/m³) | 0.770 | 0.747 |
| Adopted initial specific gravity | 2.85 | 2.85 |
| Estimated initial void ratio # | 3.06 | 3.06 |
| Estimated initial porosity | 0.753 | 0.754 |

The following results were observed for each column:
Column 1:
   - The column rapidly wetting up (over the first 40 days) to a high gravimetric moisture content of ~ 80% and a saturation of ~ 90%, which was largely retained.
   - Under these conditions, the Soil Water Characterization Curve and Hydraulic Conductivity Function indicate a high (continuum) hydraulic conductivity of ~ 10⁻⁴ m/s, ~ 25 times the full irrigation rate, suggesting that continuum flow dominated.
Column 2:
   - The column initially wet up (over ~ 5 days) to a gravimetric moisture content of ~ 55% and a saturation of ~ 60%, corresponding to a (continuum) hydraulic conductivity of ~ 2 x 10⁻⁷ m/s.
   - This continuum hydraulic conductivity is lower than the flow rate of solution exiting the column, implying that preferred pathways (channels) dominated the exiting flow rate.
   - The column continued to wet up slowly, achieving ~ 63% gravimetric moisture content and a saturation of ~ 73%, corresponding to a (continuum) hydraulic conductivity of ~ 1.6 x 10⁻⁶ m/s. The Applicant believes that it would have slowly wet up further had the test been continued at the highest irrigation rate.
   - The final (continuum) hydraulic conductivity is - 2.5 times lower than the measured exiting flow rate (of - 4 x 10⁻⁶ m/s), and there was little ongoing hold-up of solution in the heap.
   - This implies that flow along preferred pathways continued to dominate the exiting flow rate.

It should be noted that whilst 100% saturation is undesirable, a saturation level that is too low is also undesirable as this will result in agglomerates/ore particles drying and becoming brittle. 100% saturation is undesirable as the structure of the agglomerates breaks down and the column loses permeability. The preferred range of saturation is between about 70 to 90%, still preferably 80 to 90%.

Hydraulic conductivity provides a measure of the ease with which the ore material permits the flow of solution through the heap. A greater hydraulic conductivity indicates that the solution will flow more readily through the heap. However, the actual flow is also dependent on a variety of factors, including the porosity of the heap.

The initial rate of wetting up of the columns appeared independent of the irrigation rate, and was probably dominated by preferred pathways or channels. However, the extent of wetting up was restricted by the irrigation rate and the duration at that rate.

Due to the high initial irrigation rate, and it being held for over 40 days, Column 1 wet up to the extent that outflow was not restricted. Due to the low initial irrigation rate, Column 2 remained reliant on preferred pathways to maintain outflow.

To maximise wetting of the material and hence maximum nickel recovery, the initial irrigation rate should be higher and held for sufficient time for continuum flow (referring to net flow through the system as opposed to flow that enters discrete particles due to pore pressure) to dominate. This will rapidly wet up the heap, raising its hydraulic conductivity.

In this example, Column 1 achieved approximately 85% nickel recovery compared with approximately 50% in Column 2, indicating the impact of the preferred procedure for wetting the ore material.

It has been shown that applying a relatively high initial flow rate has unexpected advantages over the prior art method of "ramping up" from a low flow rate. In this way, a high hydraulic conductivity is maintained, meaning that the percolation rate of the lixiviant through the ore material is improved. Further, using this method, improved leaching kinetics have been observed and higher metal recoveries obtained.

Modifications and variations such as would be apparent to the skilled addressee are considered to fall within the scope of the present invention.

## Claims

1. An improved leaching method **characterised by** the method steps of:
i) preparing and stacking and ore material to be leached such that the ore material is suitable for an atmospheric leach;
ii) applying a lixiviant at an initial irrigation rate;
iii) subsequently applying the lixiviant at a second irrigation rate, the second irrigation rate being lower than the first irrigation rate; and
iv) recovering metal values from a pregnant liquor solution resulting from steps ii) and iii).

2. A method according to claim 1, wherein the ore material preparation includes agglomerating the ore with water and/or acid prior to application of the lixiviant.

3. A method according to claim 1 or 2, wherein the preparation of the ore material further includes stacking in one or more heaps.

4. A method according to any one of claims 1 to 3, wherein the initial irrigation rate of the lixiviant falls within the range of about 10 L/m²/hr and 600 L/m²/hr.

5. A method according to any one of the preceding claims, wherein the initial irrigation rate falls within the range of 15 L/m²/hr and 30 L/m²/hr.

6. A method according to any one of the preceding claims, wherein the initial irrigation rate is applied for a period of about 1 to 80 days.

7. A method according to any one of the preceding claims, wherein the initial irrigation rate is applied for a period of about 35 to 45 days.

8. A method according to any one of the preceding claims, wherein the second irrigation rate falls within the range of about 5 L/m²/hr and 15 L/m²/hr.

9. A method according to any one of the preceding claims, wherein the second irrigation rate is applied for a period of about 60 to 480 days.

10. A method according to any one of the preceding claims, wherein the second irrigation rate is applied for a period of about 60 to 360 days.

11. A method according to any one of the preceding claims, wherein the second irrigation rate is increased over time towards the range of the first irrigation rate.

12. A method according to any one of the preceding claims, wherein the second irrigation rate is increased over a period of about 70 to 110 days.

13. A method according to any one of the preceding claims, wherein the second irrigation rate is increased over a period of about 70 to 90 days.

14. A method according to any one of the preceding claims, wherein the degree of saturation achieved at the initial irrigation rate is between about 70 to 90%, preferably between about 80% to 90%.

15. A method according to any one of the preceding claims, wherein recovery of the metal values is achieved by any one or more of ion exchange, electrowinning, crystallisation, solvent extraction and chemical precipitation.

## Patentansprüche

1. Ein verbessertes Laugungsverfahren, das durch die folgenden Verfahrensschritte gekennzeichnet ist:
i) Zubereiten und Aufschichten eines Erzmaterials, das gelaugt werden soll, so dass das Erzmaterial für ein atmosphärisches Laugen geeignet ist;
ii) Anwenden eines Auslaugungsmittels bei einer ersten Bewässerungsgeschwindigkeit;
iii) anschließend Anwenden des Auslaugungsmittels bei einer zweiten Bewässerungsgeschwindigkeit, wobei die zweite Bewässerungsgeschwindigkeit niedriger als die erste Bewässerungsgeschwindigkeit ist; und
iv) Gewinnen von Metallanteilen aus einer wertstoffhaltigen Flüssigkeitslösung, die aus Schritten ii) und iii) resultiert.

2. Verfahren gemäß Anspruch 1, wobei die Erzmaterialzubereitung das Agglomerieren des Erzes mit Wasser und/oder Säure vor der Anwendung des Auslaugungsmittels umfasst.

3. Verfahren gemäß Anspruch 1 oder 2, wobei die Zubereitung des Erzmaterials ferner das Aufschichten in eine oder mehrere Halden umfasst.

4. Verfahren gemäß einem der Ansprüche 1 bis 3, wobei die anfängliche Bewässerungsgeschwindigkeit des Auslaugungsmittels innerhalb des Bereichs von etwa 10 L/m²/h und 600 L/m²/h liegt.

5. Verfahren gemäß einem der vorhergehenden Ansprüche, wobei die anfängliche Bewässerungsgeschwindigkeit innerhalb des Bereichs von 15 L/m²/h und 30 L/m²/h liegt.

6. Verfahren gemäß einem der vorhergehenden Ansprüche, wobei die anfängliche Bewässerungsgeschwindigkeit für einen Zeitraum von etwa 1 bis 80 Tagen angewendet wird.

7. Verfahren gemäß einem der vorhergehenden Ansprüche, wobei die anfängliche Bewässerungsgeschwindigkeit für einen Zeitraum von etwa 35 bis 45 Tagen angewendet wird.

8. Verfahren gemäß einem der vorhergehenden Ansprüche, wobei die zweite Bewässerungsgeschwindigkeit innerhalb des Bereichs von etwa 5 L/m²/h und 15 L/m²/h liegt.

9. Verfahren gemäß einem der vorhergehenden Ansprüche, wobei die zweite Bewässerungsgeschwindigkeit für einen Zeitraum von etwa 60 bis 480 Tagen angewendet wird.

10. Verfahren gemäß einem der vorhergehenden Ansprüche, wobei die zweite Bewässerungsgeschwindigkeit für einen Zeitraum von etwa 60 bis 360 Tagen angewendet wird.

11. Verfahren gemäß einem der vorhergehenden Ansprüche, wobei die zweite Bewässerungsgeschwindigkeit mit der Zeit zu dem Bereich der ersten Bewässerungsgeschwindigkeit hin erhöht wird.

12. Verfahren gemäß einem der vorhergehenden Ansprüche, wobei die zweite Bewässerungsgeschwindigkeit über einen Zeitraum von etwa 70 bis 110 Tagen erhöht wird.

13. Verfahren gemäß einem der vorhergehenden Ansprüche, wobei die zweite Bewässerungsgeschwindigkeit über einen Zeitraum von etwa 70 bis 90 Tagen erhöht wird.

14. Verfahren gemäß einem der vorhergehenden Ansprüche, wobei der bei der ersten Bewässerungsgeschwindigkeit erreichte Sättigungsgrad zwischen etwa 70 bis 90 %, vorzugsweise zwischen etwa 80 % bis 90 %, liegt.

15. Verfahren gemäß einem der vorhergehenden Ansprüche, wobei die Gewinnung der Metallanteile durch eines oder mehrere aus Folgenden erreicht wird: Ionenaustausch, elektrolytische Metallgewinnung, Kristallisierung, Lösungsmittelextraktion und chemische Ausfällung.

## Revendications

1. Une méthode de lixiviation améliorée **caractérisée par** les étapes méthodiques consistant à :
i) préparer et empiler un matériau sous forme de minerai devant être lixivié de sorte que le matériau sous forme de minerai convienne pour une lixiviation atmosphérique ;
ii) appliquer un lixiviant à un taux d'irrigation initial ;
iii) appliquer ensuite le lixiviant à un deuxième taux d'irrigation, le deuxième taux d'irrigation étant inférieur au premier taux d'irrigation ; et
iv) récupérer des métaux de valeur d'une solution de liqueur mère résultant des étapes ii) et iii).

2. Une méthode selon la revendication 1, dans laquelle la préparation du matériau sous forme de minerai comporte l'agglomération du minerai avec de l'eau et/ou de l'acide avant l'application du lixiviant.

3. Une méthode selon la revendication 1 ou la revendication 2, dans laquelle la préparation du matériau sous forme de minerai comporte de plus l'empilement en un ou plusieurs amas.

4. Une méthode selon une quelconque des revendications 1 à 3, dans laquelle le taux d'irrigation initial du lixiviant appartient à la gamme allant d'environ 10 L/m²/h à 600 L/m²/h.

5. Une méthode selon une quelconque des revendications précédentes, dans laquelle le taux d'irrigation initial appartient à la gamme allant de 15 L/m²/h à 30 L/m²/h.

6. Une méthode selon une quelconque des revendications précédentes, dans laquelle le taux d'irrigation initial est appliqué pendant une durée d'environ 1 à 80 jours.

7. Une méthode selon une quelconque des revendications précédentes, dans laquelle le taux d'irrigation initial est appliqué pendant une durée d'environ 35 à 45 jours.

8. Une méthode selon une quelconque des revendications précédentes, dans laquelle le deuxième taux d'irrigation appartient à la gamme allant d'environ 5 L/m²/h à 15 L/m²/h.

9. Une méthode selon une quelconque des revendications précédentes, dans laquelle le deuxième taux d'irrigation est appliqué pendant une durée d'environ 60 à 480 jours.

10. Une méthode selon une quelconque des revendications précédentes, dans laquelle le deuxième taux d'irrigation est appliqué pendant une durée d'environ 60 à 360 jours.

11. Une méthode selon une quelconque des revendications précédentes, dans laquelle le deuxième taux d'irrigation est augmenté avec le temps pour être amené à un taux plus proche de la gamme du premier taux d'irrigation.

12. Une méthode selon une quelconque des revendications précédentes, dans laquelle le deuxième taux d'irrigation est augmenté sur une durée d'environ 70 à 110 jours.

13. Une méthode selon une quelconque des revendications précédentes, dans laquelle le deuxième taux d'irrigation est augmenté sur une durée d'environ 70 à 90 jours.

14. Une méthode selon une quelconque des revendications précédentes, dans laquelle le degré de saturation atteint au taux d'irrigation initial est compris entre 70 et 90 % environ, de préférence entre 80 et 90 % environ.

15. Une méthode selon une quelconque des revendications précédentes, dans laquelle la récupération des métaux de valeur est faite au moyen d'un quelconque ou de plusieurs des procédés suivants : échange d'ions, extraction électrolytique, cristallisation, extraction par solvants et précipitation chimique.
